# EUROPÄISCHE PATENTSCHRIFT

(11) **EP 3 562 700 B1**
(45) Veröffentlichungstag und Bekanntmachung des Hinweises auf die Patenterteilung: **09.03.2022**
(21) Anmeldenummer: 17829632.3
(22) Anmeldetag: 20.12.2017
(51) Int. Cl.: B60K 28/06, B60K 37/06

(54) **ANWENDERSCHNITTSTELLEN, COMPUTERPROGRAMMPRODUKT, SIGNALFOLGE, FORTBEWEGUNGSMITTEL UND VERFAHREN ZUM ANZEIGEN VON INFORMATIONEN AUF EINER ANZEIGEEINRICHTUNG**
USER INTERFACES, COMPUTER PROGRAM PRODUCT, SIGNAL SEQUENCE, MEANS OF LOCOMOTION AND METHOD FOR DISPLAYING INFORMATION ON A DISPLAY DEVICE
INTERFACES UTILISATEUR, PRODUIT-PROGRAMME INFORMATIQUE, SUITE DE SIGNAUX, MOYEN DE DÉPLACEMENT ET PROCÉDÉ D'AFFICHAGE D'INFORMATIONS SUR UN AFFICHEUR

(30) Priorität: 27.12.2016 EP 16206960
(43) Veröffentlichungstag der Anmeldung: 06.11.2019
(73) Patentinhaber: Volkswagen Aktiengesellschaft, 38440 Wolfsburg (DE)
(72) Erfinder: KASSNER, Astrid, 10117 Berlin (DE); CULLMANN, Jaqueline, 38118 Braunschweig (DE); KÖTTER, Nils, 30161 Hannover (DE)
(86) Internationale Anmeldenummer: PCT/EP2017/083800
(87) Internationale Veröffentlichungsnummer: WO 2018/122062

(56) Entgegenhaltungen:
- DE-A1-102008 038 816
- DE-A1-102011 084 887
- GB-A- 2 535 544

## Beschreibung

Die vorliegende Erfindung betrifft Anwenderschnittstellen, ein Computerprogrammprodukt, eine Signalfolge, ein Fortbewegungsmittel sowie Verfahren zum Anzeigen von Informationen auf einer Anzeigeeinrichtung. Insbesondere betrifft die vorliegende Erfindung eine bedarfsweise Verwendung einer Anzeigeeinrichtung sowie eine bedarfsgerechte Gestaltung einer Anzeigedauer.

Zahlreiche, meist zeitdynamische Anzeigen in Fahrzeugdisplays erfordern es, dass der Fahrer deren Inhalt wahrnimmt oder ggf. sogar entsprechend handelt. Beispielsweise ist es wichtig, dass der Fahrer eine Warnanzeige im Kombiinstrument sieht, die vor einem geringen Tankinhalt warnt. Weitere Anzeigen mit Wahrnehmungs- und Handlungsnotwendigkeit sind beispielsweise Vorschläge, die ein intelligenter Assistent dem Fahrer unterbreitet. Hier werden auf den Fahrer und die Situation zugeschnittene Vorschläge unterbreitet. Damit der Fahrer davon profitieren kann und das jeweilige Bedienkonzept vom Anwender als geeignet bewertet wird, ist es auch wichtig, dass der Fahrer die Vorschläge überhaupt wahrnehmen konnte und genug Zeit hat, sich für die Optionen zu entscheiden.

GB 2535544 A offenbart eine Anwenderschnittstelle in einem Fortbewegungsmittel, in welcher eine Information auf einem Display angezeigt wird, wenn der Anwender das Display erblickt. Außerdem wird vorgeschlagen, eine Information von einem ersten Display auf einem zweiten Display anzuzeigen, wenn der Anwender das erste Display erblickt.

DE 10 2008 038 816 A1 offenbart eine Anwenderschnittstelle für ein Fortbewegungsmittel, bei welchem die Bewegung der Augen des Fahrers zur Untersuchung eines Zustandes des Fahrers analysiert werden. In Abhängigkeit eines Zustandes des Fahrers wird eine bestimmte Information auf einer optischen Anzeige erst dann ausgeblendet oder durch eine andere Anzeige überdeckt, wenn anhand der Blickrichtung und einer Blickdauer des Fahrers abgeleitet wird, dass der Fahrer diese bestimmte Information auch erfasst hat. Zudem wird vorgeschlagen, eine bestimmte Information auf einer optischen Anzeige abhängig von der Blickrichtung anzuzeigen, um sicherzustellen, dass der Fahrer diese Information sofort erfasst.

DE 10 2011 084 887 A1 offenbart ein Ausblenden einer Information auf einem Bildschirm eines Fortbewegungsmittels, sofern festgestellt wird, dass der Anwender die Information/den Bildschirm zu lange erblickt, sodass zu befürchten ist, dass er durch die Information zu sehr vom Straßengeschehen abgelenkt ist. Durch Ausblenden der Nachricht wird bezweckt, dass der Anwender automatisch wieder auf die Straße schaut.

Die alleinige Anzeige der Warnungen oder Vorschläge für eine bestimmte Dauer kann allerdings nicht sicherstellen, dass der Fahrer die Anzeige bewusst wahrgenommen hat oder genügend Zeit hatte, sich ggf. für eine Option zu entscheiden. Ein weiteres Problem besteht darin, dass sich der Fahrer bei Einblenden einer Meldung gezwungen sieht, diese möglichst schnell zu betrachten und damit gerade in stressigen Verkehrssituationen abgelenkt ist. Überdies kann eine Anzeige von Meldungen, welche an den Fahrer des Fortbewegungsmittels adressiert sind, die übrigen Insassen bei der Betrachtung eines zuvor angezeigten Bildschirminhaltes hindern. Beispielsweise kann auf einem Bildschirm ein Fernsehprogramm, ein Video, ein Foto oder ein anderer Multimediainhalt dargestellt werden. Da für die übrigen Insassen die Meldung ggf. nicht relevant ist, ist eine solche Störung bestmöglich zu vermeiden.

Es ist eine Aufgabe der vorliegenden Erfindung, die vorgenannten Nachteile des Standes der Technik zu lindern bzw. auszuräumen.

Die vorgenannte Aufgabe wird gemäß einem ersten Aspekt der vorliegenden Erfindung durch ein Verfahren zum Anzeigen von Informationen auf einer Anzeigeeinrichtung (z. B. eines Fortbewegungsmittels) gelöst. Die Anzeigeeinrichtung kann beispielsweise als Kombiinstrument, zentrales Informationsdisplay, Head-Up-Display o. ä. ausgestaltet sein. In einem ersten Schritt wird eine anzuzeigende Information ermittelt. Insbesondere kann dieser Schritt den nachfolgend beschriebenen Schritten zeitlich vorausgehen. Mit anderen Worten wird der Bedarf ermittelt, den Anwender durch eine optische Darstellung eines Hinweises über die Information in Kenntnis zu setzen. Anschließend wird ermittelt, dass der Anwender die Anzeigeeinrichtung erblickt. Mit anderen Worten wird sensorisch festgestellt, dass die Anzeigeeinrichtung in ein Blickfeld des Anwenders gerückt ist. Insbesondere kann hierbei vorgesehen sein, dass die Anzeigeeinrichtung vom Anwender bewusst angesehen und insbesondere fokussiert wird. Mit anderen Worten zeigt der Anwender, dass die Informationen auf der Anzeigeeinrichtung nun durch ihn wahrgenommen werden (sollen). Im Ansprechen darauf wird eine die Information repräsentierende Nachricht auf der Anzeigeeinrichtung angezeigt. Mit anderen Worten wird die Anzeige der Nachricht solange verzögert, bis der Anwender die Anzeigeeinrichtung erblickt, was beispielsweise mittels Blickverfolgung, Kopforientierung oder "Gazetracking" ermittelt werden kann. Obwohl die anzuzeigende Information bereits (lange) zuvor ermittelt worden ist und ihre Relevanz für den Anwender festgestellt worden ist, wird erst im Ansprechen auf die ermittelte Möglichkeit, dass der Anwender die Nachricht auch mit hinreichender Wahrscheinlichkeit wahrnehmen kann, die Nachricht auf der Anzeigeeinrichtung angezeigt. Es wird somit vermieden, dass übrige Verwender/Anwender der Anzeigeeinrichtung durch die Anzeige der Nachricht gestört werden. Überdies wird vermieden, dass der Anwender (aus dem Augenwinkel) die Nachricht in einer Situation erblickt, in welcher er seine Aufmerksamkeit für andere Aufgaben benötigt. Auf diese Weise wird der Anwender nicht durch die zu ungünstigem Zeitpunkt angezeigte Nachricht von dem Verkehrsgeschehen oder anderen Aufgaben abgelenkt. Anschließend wird ermittelt, dass der Anwender die Anzeigeeinrichtung erneut erblickt und im Ansprechen darauf die Nachricht erneut angezeigt. Mit anderen Worten wird nach einem Abwenden des Blicks des Anwenders die Nachricht wieder zum Vorschein gebracht, sobald der Anwender die Anzeigeeinrichtung erneut erblickt/fokussiert.

Die vorstehend genannte Aufgabe wird gemäß einem zweiten Aspekt der vorliegenden Erfindung durch ein Verfahren zum Anzeigen von Informationen auf einer Anzeigeeinrichtung (z. B. eines Fortbewegungsmittels) gelöst. Hierzu wird eine Nachricht auf der Anzeigeeinrichtung angezeigt. Die Anzeigeeinrichtung kann beispielsweise ein Kombiinstrument, ein zentrales Informationsdisplay, ein Head-Up-Display o. ä. sein. Anschließend wird ermittelt, dass ein Anwender einen Blick von der Anzeigeeinrichtung abwendet. Mit anderen Worten hat der Anwender während des Anzeigens der Nachricht (zumindest kurzzeitig) die Anzeigeeinrichtung in einem zentralen, insbesondere primären, Blickfeld gehabt und optional auch fokussiert. Im Ansprechen darauf, dass der Anwender seinen Blick von der Anzeigeeinrichtung abwendet, wird die Nachricht ausgeblendet. Auf diese Weise wird vermieden, dass die übrigen Verwender/Anwender der Anzeigeeinrichtung (z. B. Insassen eines Fortbewegungsmittels) durch die fortwährende Anzeige der Nachricht, welche ggf. geringe oder keine Relevanz für sie aufweist, gestört werden. Auch für den zweitgenannten Erfindungsaspekt kann eine Blickrichtungserkennung/Gazetracking und/oder eine Kopforientierung des Anwenders erkannt werden. Durch das vorgeschlagene Verfahren wird sichergestellt, dass Meldungen zeitlich dann angezeigt werden, wenn sie akut sind. Der Fahrer kann dieses auch ohne Blickabwendung von der Straße durch die Bewegung auf dem Display peripher wahrnehmen. Gleichzeitig ist es im Unterschied zu heutigen Anzeigen, die unabhängig von einer Blickzuwendung durch den Fahrer nach einer bestimmten Zeit wieder ausgeblendet werden, nicht notwendig sofort auf die Meldung zu schauen. Die Anzeigedauer der Meldung beginnt erst dann abzulaufen, wenn der Fahrer auf die Meldung oder das Display schaut. Die Meldung "wartet" also auf den Fahrer und wird mit Hilfe des Gazetrackings erst eine bestimmte Zeit nach Beginn der Blickzuwendung wieder ausgeblendet. Zusätzlich wird ermittelt, dass der Anwender die Anzeigeeinrichtung erneut erblickt und im Ansprechen darauf die Nachricht erneut angezeigt. Mit anderen Worten wird nach dem Ausblenden der Nachricht aufgrund eines Abwendens des Blicks des Anwenders die Nachricht wieder zum Vorschein gebracht, sobald der Anwender die Anzeigeeinrichtung erneut erblickt/fokussiert. Die Vorteile ergeben sich in entsprechender Weise, wie dies für die erste Zeitdauer des Studiums der Nachricht durch den Anwender beschrieben worden ist. Insgesamt bietet diese Vorgehensweise den Vorteil, den Fahrer zeitnah über eingehende Meldungen zu informieren und ihn aber nicht zu einem sofortigen Blickwechsel zu zwingen, sondern eine Betrachtung und Bearbeitung der Meldung in unkritischen Verkehrssituationen zu ermöglichen.

Die Unteransprüche zeigen bevorzugte Weiterbildungen der Erfindung.

Wenn im Rahmen der vorliegenden Erfindung von einer Aktion "im Ansprechen auf" ein weiteres Ereignis die Rede ist, so schließt dies nicht aus, dass sich beispielsweise eine vordefinierte Zeitdauer an das Ereignis anschließt, nach Ablauf welcher erfindungsgemäß die Aktion ausgelöst wird. Derartige Zeitdauern können zur Beruhigung der Anzeige verwendet werden.

Um eine geeignete Anzeigedauer für die Nachricht vorzudefinieren, kann im Ansprechen auf das Erblicken der Nachricht durch den Anwender ein Timer gestartet werden, bei dessen Ablauf die Nachricht ausgeblendet (nicht mehr angezeigt) wird. Der Timer kann so bemessen sein, dass 90 % oder 95 % der Anwender die Gesamtdauer zum Studium der Nachricht als angemessen beurteilen. Indem der Timer erst beim Erblicken der Nachricht durch den Anwender gestartet wird, kann sichergestellt werden, dass der Anwender die Nachricht nicht nur wahrgenommen hat, sondern auch hinreichend Zeit hatte, ihren vollen Informationsgehalt zu erfassen und zu würdigen.

Sofern der Anwender (z. B. aufgrund anderer Aufgaben) von dem fortlaufenden Betrachten der Nachricht/der Anzeigeeinrichtung abgebracht wird, kann der Timer im Ansprechen darauf, dass der Anwender die Anzeigeeinrichtung nicht mehr erblickt, angehalten werden. Mit anderen Worten pausiert der Timer insbesondere so lange, wie der Anwender die Anzeigeeinrichtung (zwischenzeitlich) nicht erblickt/fokussiert.

Um die Gesamtanzeigedauer entsprechend der vordefinierten Laufzeit des Timers zu gewährleisten, kann der Timer im Ansprechen auf ein erneutes Erblicken der Anzeigeeinrichtung durch den Anwender fortgesetzt werden. Dieser Vorgang kann sich für jeden Hinweis/jede Information, welche es anzuzeigen gilt, beliebig oft fortsetzen, bis die Gesamtlaufzeit des Timers beendet ist. Selbstverständlich kann vorgesehen sein, die Gesamtlaufzeit des Timers in Abhängigkeit der Anzahl der Unterbrechungen beim Erblicken der Anzeigeeinrichtung zu verlängern. Beispielsweise kann für jede Unterbrechung eine halbe Sekunde zusätzliche Gesamtlaufzeit des Timers hinzuaddiert werden, um Fokussierungsvorgänge durch die Augen des Anwenders sowie Wiederauffinden einer Textpassage, an welcher der Anwender den Lesevorgang des Hinweises unterbrochen hat, zu kompensieren.

Sofern das erfindungsgemäße Verfahren beispielsweise in einem Fortbewegungsmittel ausgeführt wird, kann eine Funktion des Fortbewegungsmittels die Nachricht verwenden. Mit anderen Worten kann das Fortbewegungsmittel den Anwender über seinen Zustand und/oder eine Verkehrssituation informieren. Alternativ oder zusätzlich kann es über eine eingegangene Nachricht (z. B. Textnachricht, E-Mail, Sprachnachricht o. ä.) informieren. Zudem können Betriebsmittelstatus und alternativ oder zusätzlich eine Navigationsfunktion/eine Bordcomputerfunktion die Darstellung der Nachricht veranlassen. Außerdem könnte das Fortbewegungsmittel dem Nutzer Vorschläge unterbreiten, bestimmte Handlungen auszuführen (z.B. an einen Telefonanruf beim Ehepartner zu erinnern, weil dieser immer um eine bestimmte Uhrzeit ausgeführt wird).

Gemäß einem dritten Aspekt der vorliegenden Erfindung wird eine Anwenderschnittstelle zum Anzeigen von Nachrichten auf einer Anzeigeeinrichtung (z. B. eines Fortbewegungsmittels) vorgeschlagen. Die Anzeigeeinrichtung kann als Kombiinstrument, zentrales Informationsdisplay, Head-Up-Display o. ä. ausgestaltet sein. Die Anwenderschnittstelle umfasst einen Dateneingang, eine Auswerteeinheit und einen Datenausgang. Der Dateneingang kann beispielsweise einen Busteilnehmer und/oder eine Sensorleitung aufweisen. Die Auswerteeinheit kann als programmierbarer Prozessor, Mikrocontroller, elektronisches Steuergerät o. ä. ausgestaltet sein. Auch der Datenausgang kann einen Busteilnehmer aufweisen und insbesondere zur Verbindung mit der Anzeigeeinrichtung ausgestaltet sein. Die vorgenannte Hardware kann auch für eine Anwenderschnittstelle gemäß einem (nachfolgend beschriebenen) viertgenannten Erfindungsaspekt verwendet werden. Die Auswerteeinheit ist eingerichtet, mittels des Dateneingangs eine anzuzeigende Information zu ermitteln und zusätzlich festzustellen, dass ein Anwender die Anzeigeeinrichtung erblickt/fokussiert. Im Ansprechen darauf kann die Auswerteeinheit mittels des Datenausgangs eine die Information repräsentierende Nachricht auf der Anzeigeeinrichtung anzeigen. Die vorstehend beschriebene Anwenderschnittstelle ist in entsprechender Weise eingerichtet, die Merkmale, Merkmalskombinationen und Vorteile des Verfahrens gemäß dem erstgenannten Erfindungsaspekt zu verwirklichen.

Gemäß einem vierten Aspekt der vorliegenden Erfindung wird eine Anwenderschnittstelle zum Anzeigen von Nachrichten auf einer Anzeigeeinrichtung (z. B. eines Fortbewegungsmittels) vorgeschlagen. Die Hardware entspricht derjenigen der Anwenderschnittstelle gemäß dem drittgenannten Erfindungsaspekt. Die Auswerteeinheit der Anwenderschnittstelle gemäß dem vierten Erfindungsaspekt ist eingerichtet, mittels des Datenausgangs eine Nachricht auf der Anzeigeeinrichtung anzuzeigen. Mittels des Datenausgangs ist die Auswerteeinheit eingerichtet, ein Abwenden eines Blickes des Anwenders von der Anzeigeeinrichtung zu ermitteln. Hierzu kann beispielsweise ein optischer Sensor mit dem Dateneingang der Anwenderschnittstelle informationstechnisch verbunden sein. Im Ansprechen auf das Abwenden des Blickes des Anwenders von der Anzeigeeinrichtung kann die Auswerteeinheit mittels des Datenausgangs die Nachricht ausblenden. Auch bezüglich der Merkmale, Merkmalskombinationen und der sich aus diesen ergebenden Vorteile der Anwenderschnittstelle gemäß dem viertgenannten Erfindungsaspekt wird zur Vermeidung von Wiederholungen auf die obigen Ausführungen zu den übrigen drei Erfindungsaspekten verwiesen.

Gemäß einem fünften Aspekt der vorliegenden Erfindung wird ein Computerprogrammprodukt vorgeschlagen, welches Instruktionen umfasst, welche, wenn sie auf einer Auswerteeinheit einer erfindungsgemäßen Anwenderschnittstelle gemäß dem drittgenannten und/oder dem viertgenannten Erfindungsaspekt ausgeführt werden, die Auswerteeinheit veranlassen, die Schritte eines Verfahrens gemäß dem erstgenannten und/oder gemäß dem zweitgenannten Erfindungsaspekt auszuführen. Das Computerprogrammprodukt kann als CD, DVD, Blue-Ray-Disc, Flashspeicher, Festplatte, RAM, ROM, Cache, etc. ausgestaltet sein.

Gemäß einem sechsten Aspekt der vorliegenden Erfindung wird eine Signalfolge vorgeschlagen, welche Instruktionen repräsentiert, welche, wenn sie auf einer Auswerteeinheit einer erfindungsgemäßen Anwenderschnittstelle gemäß dem drittgenannten und/oder viertgenannten Erfindungsaspekt ausgeführt werden, die Anwenderschnittstelle veranlassen, die Schritte eines Verfahrens gemäß dem erstgenannten und/oder gemäß dem zweitgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem siebten Aspekt der vorliegenden Erfindung wird ein Fortbewegungsmittel (z. B. ein Pkw, ein Transporter, LKW, Motorrad, Wasser- und/oder Luftfahrzeug) vorgeschlagen, welches eine Anwenderschnittstelle gemäß dem drittgenannten und/oder gemäß dem viertgenannten Erfindungsaspekt aufweist. Insbesondere können die Komponenten als dauerhaft in das Energie- und Informationsbordnetz des Fortbewegungsmittels integrierte Komponenten ausgestaltet sein.

Nachfolgend werden einzelne Merkmale und Vorteile der vorliegenden Erfindung ohne einschränkende Intension zur weiteren Veranschaulichung beschrieben. Gemäß der vorliegenden Erfindung wird insbesondere ein Gazetracking zur Ermittlung einer Blickrichtung des Anwenders verwendet. Eine dafür verbaute Infrarotkamera kann verwendet werden, um zu erkennen, wann der Fahrer auf das Display mit der angezeigten Meldung schaut bzw. in welchen Displaybereich der Anwender schaut.

Grundsätzlich verwendbar ist die vorliegende Erfindung für Meldungen, welche im Kombiinstrument und/oder im zentralen Informationsdisplay angezeigt werden. Ein Vorteil der erfindungsgemäß vorgeschlagenen Lehre besteht darin, dass die Anzeigedauer der Meldungen in Abhängigkeit einer Zuwendung des Anwenders zum Display erfolgt. Beispielsweise wird erst mit Zuwendung zum Display die Anzeigedauer begonnen oder sogar die Anzeige selbst vorgenommen. Dadurch besteht für den Fahrer keine Veranlassung, den Blick bei Erscheinen der Meldung sofort von der Straße abzuwenden und dadurch eine geringere Ablenkungsgefahr, wodurch die Verkehrssicherheit erhöht wird. Gleichzeitig stört die bis zur Blickzuwendung unter Umständen längere Anzeigedauer und damit ggf. einhergehende Überdeckung anderer Displayinhalte nicht, wie im Stand der Technik.

Neben der Steuerung der Anzeigedauer kann das Gazetracking genutzt werden, um die Dauer festzulegen, innerhalb derer der Fahrer eine der ggf. angezeigten Optionen auswählen kann. Beispielsweise können Vorschläge eines persönlichen intelligenten Assistenten optional vom Fahrer akzeptierbar oder aber auch ablehnbar sein, um eine Bevormundung des Fahrers zu verhindern. Die Zeitspanne, innerhalb derer der Fahrer handeln kann, kann ebenfalls durch das Gazetracking gestartet werden. Der Vorteil bei Verwendung des Gazetracking besteht darin, dass dem Fahrer immer die komplette Anzeigedauer zur Verfügung steht, um sich für eine Option zu entscheiden. Auf diese Weise müssen keine übereilten Entscheidungen getroffen werden. Optional kann das System (z. B. nach einer vordefinierten und/oder vordefinierbaren Zeitspanne) eigenständig eine Entscheidung fällen.

Die Zeitspanne, innerhalb derer der Fahrer entscheiden kann, kann, vorzugsweise durch einen sich vergrößernden Fortschrittbalken, dargestellt werden. Eine zusätzliche Möglichkeit besteht darin, anhand der Anzeige des Fortschrittbalkens die systemseitige Handlungsauswahl für den Fall anzuzeigen, dass der Fahrer innerhalb der angezeigten Zeitspanne keine aktive Entscheidung trifft. Handelt es sich um Vorschläge, die sehr sicher vom Fahrer gewünscht werden, so wird der Fortschrittsbalken bei der Option "Annahme" des Vorschlags gezeigt. Handelt es sich um Vorschläge, deren Annahme unwahrscheinlicher ist, so wird der Fortschrittsbalken bei der Option "Ablehnung" gezeigt. Auf diese Weise wird dem Anwender visualisiert, welche Option beim Ablauf des optisch zugeordneten Fortschrittbalkens vom Betriebssystem automatisch gewählt wird.

Nachfolgend werden Ausführungsbeispiele der vorliegenden Erfindung unter Bezugnahme auf die beigefügten Zeichnungen diskutiert. Es zeigen:
- Figur 1: ein Fortbewegungsmittel gemäß einem Ausführungsbeispiel der vorliegenden Erfindung, in welchem ein Ausführungsbeispiel einer jeweiligen Anwenderschnittstelle gemäß der vorliegenden Erfindung verbaut ist;
- Figur 2: eine Draufsicht auf eine erfindungsgemäße Bediensituation; und
- Figur 3: ein Flussdiagramm veranschaulichend Schritte eines Ausführungsbeispiels eines erfindungsgemäßen Verfahrens.

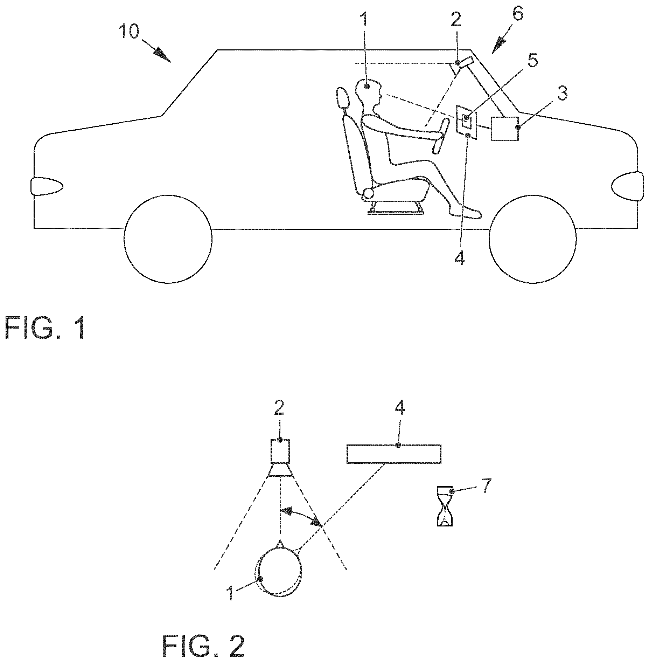

Figur 1 zeigt einen Pkw 10 als Ausführungsbeispiel eines erfindungsgemäßen Fortbewegungsmittels, in welchem eine erfindungsgemäße Anwenderschnittstelle 6 dauerhaft verbaut ist. Ein Anwender 1 erblickt einen Bildschirm 4 als Anzeigeeinheit, welche in einem Armaturenbrett des Pkws 10 verbaut ist. Ein informationstechnisch mit dem Bildschirm 4 verknüpftes elektronisches Steuergerät 3 als Auswerteeinheit ist andererseits mit einer Infrarotkamera 2 informationstechnisch verbunden. Der Anwender 1 ist im Erfassungsbereich der Infrarotkamera 2, welche einen Teil eines Dateneingangs des elektronischen Steuergerätes 3 darstellt. Auf dem Bildschirm 4 wird eine Nachricht 5 für den Anwender 1 dargestellt, welche durch den Anwender 1 nicht dringend, sondern zu gegebenem Zeitpunkt zur Kenntnis genommen werden soll. Erst wenn der Anwender 1 (wie dargestellt) den Blick auf den Bildschirm 4 richtet, wird die Nachricht 5 dargestellt, um den Anwender 1 nicht von seiner Fahraufgabe abzulenken, wenn er sich in einer anspruchsvollen Verkehrssituation befindet.

Figur 2 zeigt eine Draufsicht auf einen Anwender 1, welcher seinen Blick zunächst geradeaus in Richtung einer Infrarotkamera 2 als Dateneingang richtet und hierbei nicht den Bildschirm 4 fokussiert, auf welchem zu gegebenem Zeitpunkt eine bereits ermittelte Information in Form einer Nachricht 5 dargestellt werden soll. Sobald der Anwender 1 seinen Blick nach rechts in Richtung des Bildschirms 4 wendet, beginnt ein Timer, welcher durch ein Sanduhrsymbol 7 veranschaulicht wird, zu laufen. Sofern die maximale Laufzeit des Timers abläuft, bevor der Anwender 1 sich erneut vom Bildschirm 4 abwendet, wird die Nachricht 5 in jedem Fall wieder verborgen und ein durch sie ggf. zwischenzeitlich verdeckter Bildschirmbestandteil wird wieder ungehindert angezeigt. Sofern der Anwender sich bereits vor Ablauf der maximalen Timerlaufzeit vom Bildschirm 4 abwendet, wird der Timer angehalten und fortgesetzt, sobald der Anwender 1 seinen Blick wieder auf den Bildschirm 4 richtet.

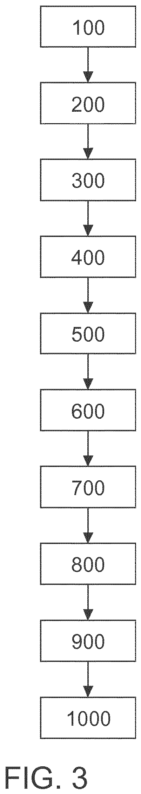

Figur 3 zeigt Schritte eines Ausführungsbeispiels eines erfindungsgemäßen Verfahrens zum Anzeigen von Informationen auf einer Anzeigeeinrichtung eines Fortbewegungsmittels. In Schritt 100 wird eine anzuzeigende Information durch ein Bordnetz des Fortbewegungsmittels ermittelt. In Schritt 200 wird nachfolgend ermittelt, dass ein Anwender die Anzeigeeinrichtung erblickt und fokussiert. Im Ansprechen darauf wird in Schritt 300 eine die Information repräsentierende Nachricht auf der Anzeigeeinrichtung angezeigt. Auf diese Weise wird der Anwender erst dann mit der Nachricht konfrontiert, wenn er ohnehin auf die Anzeigeeinrichtung blickt und (offensichtlich) keine wichtigeren Umgebungsbereiche zu fokussieren hat. In Schritt 400 wird im Ansprechen auf das Erblicken der Nachricht durch den Anwender ein Timer gestartet, bei Ablauf dessen die Nachricht ausgeblendet wird. In Schritt 500 wird ermittelt, dass der Anwender seinen Blick von der Anzeigeeinrichtung abgewendet hat. Im Ansprechen darauf passiert zweierlei: In Schritt 600 wird die Nachricht ausgeblendet, um die Anzeigefläche für anderweitige Informationen freizugeben, welche beispielsweise durch andere Insassen des Fortbewegungsmittels betrachtet werden. In Schritt 700 wird der Timer angehalten, um eine potenzielle Gesamtbetrachtungsdauer der Nachricht durch den Anwender anzuhalten. In Schritt 800 wird anschließend ermittelt, dass der Anwender die Anzeigeeinrichtung erneut erblickt und im Ansprechen darauf in Schritt 900 die Nachricht erneut dargestellt. In Schritt 1000 wird zeitgleich auch der Timer fortgesetzt, nach Ablauf dessen der Anwender hinreichend Zeit hatte, um die Nachricht zu erblicken, wahrzunehmen und ggf. entsprechend zu handeln.

Bereits beim Ermitteln auf die Information, welche es in erfindungsgemäßer Weise durch die Nachricht darzustellen gilt, kann ein Hinweis (Indikator) an den Anwender ausgegeben werden, dass im Ansprechen auf das Erblicken der Anzeigeeinrichtung zusätzliche Informationen in Form der erfindungsgemäßen Nachricht angezeigt werden. Der Hinweis kann besonders dezent ausgestaltet sein, um den Anwender nicht ungebührend abzulenken. Andererseits kann somit vermieden werden, dass der Anwender häufiger als notwendig auf die Anzeigeeinrichtung blickt, in der Hoffnung, dass hierbei eine erfindungsgemäß anzuzeigende Nachricht erscheint.

### Bezugszeichenliste

- 1: Anwender
- 2: Infrarotkamera
- 3: Elektronisches Steuergerät
- 4: Bildschirm
- 5: Nachricht
- 6: Anwenderschnittstelle
- 7: Sanduhr
- 10: Pkw
- 100 bis 1.000: Verfahrensschritte

## Patentansprüche

1. Verfahren zum Anzeigen von Informationen auf einer Anzeigeeinrichtung (4) umfassend die Schritte:
- Ermitteln (100) einer anzuzeigenden Information,
- Ermitteln (200), dass ein Anwender (1) die Anzeigeeinrichtung (4) erblickt, im Ansprechen darauf
- Anzeigen (300) einer die Information repräsentierenden Nachricht (5) auf der Anzeigeeinrichtung (4), **gekennzeichnet dadurch, dass** das Verfahren weiter umfasst
- Ermitteln (800), dass der Anwender (1) die Anzeigeeinrichtung (4) erneut erblickt und im Ansprechen darauf
- erneutes Anzeigen (900) der Nachricht (5).

2. Verfahren zum Anzeigen von Informationen auf einer Anzeigeeinrichtung (4) umfassend die Schritte:
- Anzeigen (300) einer Nachricht (5) auf der Anzeigeeinrichtung (4),
- Ermitteln (500), dass ein Anwender (1) einen Blick von der Anzeigeeinrichtung (4) abwendet, im Ansprechen darauf
- Ausblenden (600) der Nachricht (5), **gekennzeichnet dadurch, dass** das Verfahren weiter umfasst
- Ermitteln (800), dass der Anwender (1) die Anzeigeeinrichtung (4) erneut erblickt und im Ansprechen darauf
- erneutes Anzeigen (900) der Nachricht (5).

3. Verfahren nach einem der vorstehenden Ansprüche weiter umfassend
- Starten (400) eines Timers im Ansprechen auf das Erblicken der Nachricht (5) durch den Anwender (1), bei dessen Ablauf die Nachricht (5) ausgeblendet wird.

4. Verfahren nach Anspruch 3,
- Anhalten (700) des Timers im Ansprechen darauf, dass der Anwender (1) die Anzeigeeinrichtung (4) nicht mehr erblickt.

5. Verfahren nach Anspruch 4 weiter umfassend
- Fortsetzen (1000) des Timers im Ansprechen auf ein erneutes Erblicken der Anzeigeeinrichtung (4) durch den Anwender (1).

6. Verfahren nach einem der vorstehenden Ansprüche, wobei sich die Nachricht (5) auf
- eine Funktion eines Fortbewegungsmittels (10) und/oder
- eine eingegangene Nachricht und/oder
- einen Betriebsmittelstatus und/oder
- eine Navigationsfunktion
bezieht.

7. Verfahren nach einem der vorstehenden Ansprüche, wobei die Anzeigeeinrichtung (4)
- ein Head-up-Display und/oder
- ein zentrales Informationsdisplay und/oder
- ein Kombiinstrument
umfasst.

8. Verfahren nach einem der vorstehenden Ansprüche, wobei der Anwender (1) ein Fahrer eines Fortbewegungsmittels (10) ist.

9. Anwenderschnittstelle zum Anzeigen von Nachrichten (5) auf einer Anzeigeeinrichtung (4) umfassend:
- einen Dateneingang,
- eine Auswerteeinheit und
- einen Datenausgang, wobei
- die Auswerteeinheit eingerichtet ist,
mittels des Dateneingangs
- eine anzuzeigende Information zu ermitteln, und
- zu ermitteln, dass ein Anwender (1) die Anzeigeeinrichtung (4) erblickt,im Ansprechen darauf
mittels des Datenausgangs
- eine die Information repräsentierende Nachricht (5) auf der Anzeigeeinrichtung (4) anzuzeigen, **gekennzeichnet dadurch, dass** die Auswerteeinheit weiter eingerichtet ist
- mittels des Dateneingangs zu ermitteln, dass der Anwender (1) die Anzeigeeinrichtung (4) erneut erblickt und im Ansprechen darauf
mittels des Datenausgangs die Nachricht (5) erneut anzuzeigen.

10. Anwenderschnittstelle zum Anzeigen von Nachrichten (5) auf einer Anzeigeeinrichtung (4) umfassend:
- einen Dateneingang,
- eine Auswerteeinheit (3) und
- einen Datenausgang, wobei
- die Auswerteeinheit (3) eingerichtet ist,
mittels des Datenausgangs
- eine Nachricht (5) auf der Anzeigeeinrichtung (4) anzuzeigen,
mittels des Dateneingangs
- ein Abwenden eines Blickes des Anwenders (1) von der Anzeigeeinrichtung (4) zu ermitteln,
im Ansprechen darauf
mittels des Datenausgangs
- die Nachricht (5) auszublenden
mittels des Dateneingangs zu ermitteln, dass der Anwender (1) die Anzeigeeinrichtung (4) erneut erblickt und im Ansprechen darauf
- mittels des Datenausgangs die Nachricht (5) erneut anzuzeigen.

11. Anwenderschnittstelle nach Anspruch 9 oder 10, welche eingerichtet ist, ein Verfahren nach einem der vorstehenden Ansprüche 1 bis 8 auszuführen.

12. Computerprogrammprodukt umfassend Instruktionen, welche, wenn Sie auf einer Auswerteeinheit (3) einer Anwenderschnittstelle (6) nach einem der Ansprüche 9 bis 11 ausgeführt werden, die Auswerteeinheit (3) veranlassen, die Schritte eines Verfahrens nach einem der Ansprüche 1 bis 8 durchzuführen.

13. Signalfolge repräsentierend Instruktionen, welche, wenn Sie auf einer Auswerteeinheit (3) einer Anwenderschnittstelle (6) nach einem der Ansprüche 9 bis 11 ausgeführt werden, die Auswerteeinheit (3) veranlassen, die Schritte eines Verfahrens nach einem der Ansprüche 1 bis 8 durchzuführen.

14. Fortbewegungsmittel umfassend eine Anwenderschnittstelle (6) nach einem der Ansprüche 9 bis 11.

## Claims

1. Method for displaying information on a display device (4), comprising the steps of:
- determining (100) an item of information to be displayed,
- determining (200) that a user (1) is looking at the display device (4), and, in response thereto,
- displaying (300) a message (5), representing the information, on the display device (4), **characterized in that** the method further comprises
- determining (800) that the user (1) is looking at the display device (4) again, and, in response thereto,
- displaying (900) the message (5) again.

2. Method for displaying information on a display device (4), comprising the steps of:
- displaying (300) a message (5) on the display device (4),
- determining (500) that a user (1) is looking away from the display device (4), and, in response thereto,
- hiding (600) the message (5), **characterized in that** the method further comprises
- determining (800) that the user (1) is looking at the display device (4) again, and, in response thereto,
- displaying (900) the message (5) again.

3. Method according to one of the preceding claims, further comprising
- starting (400) a timer in response to the user (1) looking at the message (5), at the elapse of which the message (5) is hidden.

4. Method according to claim 3,
- stopping (700) the timer in response to the user (1) no longer looking at the display device (4).

5. Method according to claim 4, further comprising
- continuing (1000) the timer in response to the user (1) looking at the display device (4) again.

6. Method according to one of the preceding claims, wherein the message (5) relates to
- a function of a means of locomotion (10), and/or
- a received message, and/or
- an operating equipment status, and/or
- a navigation function.

7. Method according to one of the preceding claims, wherein the display device (4) comprises
- a head-up display, and/or
- a central information display, and/or
- an instrument cluster.

8. Method according to one of the preceding claims, wherein the user (1) is a driver of a means of locomotion (10).

9. User interface for displaying messages (5) on a display device (4) comprising:
- a data input,
- an evaluation unit, and
- a data output, wherein
- the evaluation unit is configured,
by means of the data input,
- to determine an item of information to be displayed, and
- to determine that a user (1) is looking at the display device (4), and, in response thereto,
by means of the data output,
- to display a message (5), representing the information, on the display device (4), **characterized in that** the evaluation unit is further configured
- to determine, by means of the data input, that the user (1) is looking at the display device (4) again, and, in response thereto,
to display the message (5) again by means of the data output.

10. User interface for displaying messages (5) on a display device (4) comprising:
- a data input,
- an evaluation unit (3), and
- a data output, wherein
- the evaluation unit (3) is configured,
by means of the data output,
- to display a message (5) on the display device (4), and,
by means of the data input,
- to determine that the user (1) is looking away from the display device (4), and,
in response thereto,
by means of the data output,
- to hide the message (5)
to determine, by means of the data input, that the user (1) is looking at the display device (4) again, and, in response thereto,
- to display the message (5) again by means of the data output.

11. User interface according to claim 9 or 10, which is configured to carry out a method according to one of the preceding claims 1 through 8.

12. Computer program product comprising instructions which, when executed on an evaluation unit (3) of a user interface (6) according to one of claims 9 through 11, cause the evaluation unit (3) to carry out the steps of a method according to one of claims 1 through 8.

13. Signal sequence representing instructions which, when executed on an evaluation unit (3) of a user interface (6) according to one of claims 9 through 11, cause the evaluation unit (3) to carry out the steps of a method according to one of claims 1 through 8.

14. Means of locomotion comprising a user interface (6) according to one of claims 9 through 11.

## Revendications

1. Procédé d'affichage d'informations sur un afficheur (4), comprenant les étapes consistant à :
- déterminer (100) une information à afficher,
- déterminer (200) qu'un utilisateur (1) regarde l'afficheur (4), en réponse à cette action
- afficher (300), sur l'afficheur (4), un message (5) représentant l'information, **caractérisé en ce que** le procédé comprend en outre les étapes consistant à :
- déterminer (800) que l'utilisateur (1) regarde de nouveau l'afficheur (4) et en réponse à cette action
- afficher de nouveau (900) le message (5).

2. Procédé d'affichage d'informations sur un afficheur (4), comprenant les étapes consistant à :
- afficher (300) un message (5) sur l'afficheur (4),
- déterminer (500) qu'un utilisateur (1) détourne le regard de l'afficheur (4), en réponse à cette action
- masquer (600) le message (5), **caractérisé en ce que** le procédé comprend en outre les étapes consistant à :
- déterminer (800) que l'utilisateur (1) regarde de nouveau l'afficheur (4) et en réponse à cette action
- afficher de nouveau (900) le message (5).

3. Procédé selon l'une quelconque des revendications précédentes, comprenant en outre les étapes consistant à :
- démarrer (400) une minuterie en réponse au fait que l'utilisateur (1) regarde le message (5), après écoulement de laquelle le message (5) est masqué.

4. Procédé selon la revendication 3,
- arrêter (700) la minuterie en réponse au fait que l'utilisateur (1) ne regarde plus l'afficheur (4).

5. Procédé selon la revendication 4, comprenant en outre les étapes consistant à :
- continuer (1000) la minuterie en réponse au fait que l'utilisateur (1) regarde de nouveau l'afficheur (4).

6. Procédé selon l'une quelconque des revendications précédentes, dans lequel le message (5) concerne
- une fonction d'un moyen de déplacement (10) et/ou
- un message reçu et/ou
- un état de moyen d'exploitation et/ou
- une fonction de navigation.

7. Procédé selon l'une quelconque des revendications précédentes, dans lequel l'afficheur (4) comprend
- un affichage tête haute et/ou
- un écran central d'affichage d'informations et/ou
- un combiné d'instruments.

8. Procédé selon l'une quelconque des revendications précédentes, dans lequel l'utilisateur (1) est un conducteur d'un moyen de déplacement (10).

9. Interface utilisateur destinée à afficher des messages (5) sur un afficheur (4), comprenant :
- une entrée de données,
- une unité de traitement et
- une sortie de données,
- l'unité de traitement étant configurée pour,
au moyen de l'entrée de données,
- déterminer une information à afficher, et
- déterminer qu'un utilisateur (1) regarde l'afficheur (4), en réponse à cette action,
au moyen de la sortie de données,
- afficher, sur l'afficheur (4), un message (5) représentant l'information, **caractérisée en ce que** l'unité de traitement est en outre configurée pour
- déterminer, au moyen de l'entrée de données, que l'utilisateur (1) regarde de nouveau l'afficheur (4) et en réponse à cette action afficher de nouveau le message (5) au moyen de la sortie de données.

10. Interface utilisateur destinée à afficher des messages (5) sur un afficheur (4), comprenant :
- une entrée de données,
- une unité de traitement (3) et
- une sortie de données,
- l'unité de traitement (3) étant configurée pour,
au moyen de la sortie de données,
- afficher un message (5) sur l'afficheur (4),
au moyen de l'entrée de données,
- déterminer le fait que l'utilisateur (1) détourne le regard de l'afficheur (4), en réponse à cette action,
au moyen de la sortie de données,
- masquer le message (5)
déterminer, au moyen de l'entrée de données, que l'utilisateur (1) regarde de nouveau l'afficheur (4) et en réponse à cette action
- afficher de nouveau le message (5) au moyen de la sortie de données.

11. Interface utilisateur selon la revendication 9 ou 10, qui est configurée pour exécuter un procédé selon l'une quelconque des revendications précédentes 1 à 8.

12. Produit-programme informatique comprenant des instructions qui, lorsqu'elles sont exécutées sur une unité de traitement (3) d'une interface utilisateur (6) selon l'une quelconque des revendications 9 à 11, amènent l'unité de traitement (3) à exécuter les étapes d'un procédé selon l'une quelconque des revendications 1 à 8.

13. Suite de signaux représentant des instructions qui, lorsqu'elles sont exécutées sur une unité de traitement (3) d'une interface utilisateur (6) selon l'une quelconque des revendications 9 à 11, amènent l'unité de traitement (3) à exécuter les étapes d'un procédé selon l'une quelconque des revendications 1 à 8.

14. Moyen de déplacement comprenant une interface utilisateur (6) selon l'une quelconque des revendications 9 à 11.
